Europäisches Patentamt

European Patent Office

Office européen des brevets

(11) Veröffentlichungsnummer : **0 022 591**
**B1**

(19)

(12) **EUROPÄISCHE PATENTSCHRIFT**

(45) Veröffentlichungstag der Patentschrift :
19.05.82

(21) Anmeldenummer : 80200619.7

(22) Anmeldetag : 30.06.80

(51) Int. Cl.$^3$ : **C 01 B  7/19, B 01 J  8/18**

(54) **Verfahren zur Herstellung von Fluorwasserstoff.**

(30) Priorität : 13.07.79 DE 2928368

(43) Veröffentlichungstag der Anmeldung :
21.01.81 (Patentblatt 81/03)

(45) Bekanntmachung des Hinweises auf die Patenterteilung : 19.05.82 Patentblatt 82/20

(84) Benannte Vertragsstaaten :
AT BE CH DE FR GB IT LI LU NL SE

(56) Entgegenhaltungen :
DE - A - 1 904 391
FR - A - 2 009 684
NO - A - 109 385
US - A - 4 065 551
US - A - 4 113 832
US - A - 4 160 808
US - A - 4 160 809

(73) Patentinhaber : **METALLGESELLSCHAFT AG**
**Reuterweg 14 Postfach 3724**
**D-6000 Frankfurt/M.1 (DE)**

**VEREINIGTE ALUMINIUM-WERKE AKTIENGESELL-
SCHAFT**
**Postfach 2468 Georg-von-Boeselager-Strasse 25**
**D-5300 Bonn 1 (DE)**

(72) Erfinder : **Reh, Lothar, Dr. Dipl.-Ing.**
**Stettiner Strasse 3**
**D-6000 Frankfurt a.M. 60 (DE)**
Erfinder : **Schmidt, Hans Werner, Dr. Dipl.-Ing.**
**Wormser Strasse 8**
**D-6000 Frankfurt a.M. (DE)**
Erfinder : **Sauer, Harald, Dr. Dipl.-Ing.**
**Ziegenhainer Strasse205**
**D-6000 Frankfurt a. M. 50 (DE)**
Erfinder : **Winkhaus, Günter, Prof. Dr. Dipl.-Chem.**
**Auf dem Stappenberg 2b**
**D-5330 Königswinter 1 (DE)**
Erfinder : **Thome, Roland, Dr. Dipl.-Chem.**
**Brüsseler Strasse 48**
**D-5300 Bonn 1 (DE)**
Erfinder : **Moritz, Dieter, Dipl.-Ing.**
**Moltkestrasse 84**
**D-4670 Lünen (DE)**

(74) Vertreter : **Fischer, Ernst, Dr.**
**Reuterweg 14**
**D-6000 Frankfurt am Main 1 (DE)**

# 0 022 591

## Verfahren zur Herstellung von Fluorwasserstoff

Die Erfindung betrifft ein Verfahren zur Herstellung von Fluorwasserstoff durch pyrohydrolytische Behandlung fluorhaltiger Materialien in einer expandierten Wirbelschicht und anschließende Kühlung der Abgase.

Es ist bekannt, daß fluorhaltige Materialien bei erhöhten Temperaturen und in Gegenwart von Wasserdampf Fluorwasserstoff abspalten (Pyrohydrolyse), der dann durch Kondensation oder Wäsche konzentriert werden kann.

Die pyrohydrolytische Abspaltung von Fluorwasserstoff hat insbesondere bei der Aufarbeitung von bei der Aluminiumelektrolyse an verschiedenen Stellen anfallenden Abfallstoffe Bedeutung erlangt. Beispielsweise gelangen bei der Schmelzflußelektrolyse, die üblicherweise mit Kryolith oder ähnlichen fluorhaltigen Flußmitteln betrieben wird, fluorhaltige Badbestandteile in die Ausmauerung der Elektrolysewanne. Bei der von Zeit zu Zeit erforderlichen erneuten Ausmauerung fällt dann das alte Ausmauerungsmaterial als sogenannter Ofenausbruch an, der je nach Betriebsart und -dauer der Zelle um 10 bis 15 Gew.-% Fluor enthalten kann.

Eine ähnliche Situation liegt vor, wenn Abgase der Schmelzflußelektrolyse durch trockene Gaswäsche von Fluorwasserstoff befreit werden. Bei Verwendung von Aluminiumoxid als Sorptionsmittel fällt, je nach Durchführung dieser Wäsche, ein mit Fluorwasserstoff beladenes Chemisorptionsmittel an, das wegen anderer in den Abgasen enthaltener Verunreinigungen wie Kohlenstoff, Schwefel, Eisen, Silizium, Phosphor und/oder Vanadin nicht in die Schmelzflußelektrolyse eingebracht werden kann, sondern aufgearbeitet werden muß.

Als geeignetes Verfahren der Aufarbeitung derartiger Abfallstoffe hat sich die Pyrohydrolyse erwiesen (DE-A 23 46 537 und DE-A 24 03 282), die auch mit der Rückgewinnung weiterer Wertstoffe, wie Aluminium oder Alkalimetall, verbunden werden kann (US-A 4 113 832). Beim zuletzt erwähnten Verfahren erfolgt die pyrohydrolytische Behandlung innerhalb eines Temperaturbereiches von etwa 1 100 bis 1 350 °C, z.B. in einer expandierten Wirbelschicht, in Gegenwart ausreichender Wasserdampfmengen. Aus dem Abgas werden Alkalifluorid und Fluorwasserstoff entfernt. Der feste Rückstand der pyrohydrolytischen Behandlung wird einer alkalischen Laugung unterworfen, um Aluminiumoxidhydrat zu erhalten. Vor der Entfernung des Alkalifluorids und des Fluorwasserstoffes erfolgt eine Kühlung des Gases durch Einsprühen von Wasser, durch Vermischen mit kaltem Gas oder durch indirekte Kühlung.

Nachteilig beim vorstehend skizzierten Verfahren ist, daß beim Kühlen durch Einspritzen von Wasser die fühlbare Wärme des Abgases nutzlos abgeführt und zudem die Gasmenge erheblich erhöht wird. Ähnliches gilt beim Kühlen durch Zumischen von kaltem Gas, wobei insbesondere die unerwünschte Verdünnung der hinsichtlich des Fluorwasserstoffgehaltes ohnehin schon niedrigprozentigen Gases im Vordergrund steht. Die auch vorgesehene indirekte Kühlung vermeidet zwar diese Nachteile, ist jedoch wegen der Korrosions- und Erosionsprobleme schwer zu beherrschen und erfordert wegen des relativ ungünstigen Wärmeüberganges infolge Verstaubens der Kühlflächen großen apparativen Aufwand (Abreinigung) bzw. große Austauschflächen.

Aufgabe der Erfindung ist, ein Verfahren bereitzustellen, daß die Nachteile der bekannten, insbesondere vorgenannten Verfahren vermeidet, insbesondere eine sinnvolle Nutzung der Abgaswärme gestattet und dennoch keinen hohen apparativen Aufwand erfordert.

Die Aufgabe wird gelöst, indem das Verfahren der eingangs genannten Art entsprechend der Erfindung derart ausgestaltet wird, daß man die Kühlung der Abgase durch direkten Eintrag von in getrenntem Kreislauf geführten Feststoffen durchführt, die ihrerseits in einem Kühler unter Nutzbarmachung der fühlbaren Wärme rückgekühlt werden.

Das erfindungsgemäße Verfahren ist anwendbar auf die Aufarbeitung der im Zusammenhang mit der Aluminiumelektrolyse anfallenden Abfallstoffe, es können jedoch auch Flußspat ($CaF_2$) bzw. andere fluorhaltige anorganische Stoffe eingesetzt werden. Ausschlaggebend ist lediglich, daß Fluorwasserstoff auf pyrohydrolytischem Wege abspaltbar ist.

Je nach Beschaffenheit des Einsatzstoffes ist es erforderlich, zwecks Erreichung der erforderlichen Reaktionstemperaturen, die wie üblich zwischen etwa 1 000 und 1 400 °C liegen, Brennstoff einzusetzen. Es kommen hierfür flüssige, gasförmige, aber auch feste Brennstoffe in Betracht, die unmittelbar in die expandierte Wirbelschicht eingeführt werden. Sofern das Einsatzgut hinreichend hohe Kohlenstoffgehalte aufweist — was im allgemeinen beim Ofenausbruch der Fall ist — ist eine gesonderte Brennstoffzuführung entbehrlich.

Die zweckmäßigste und zugleich einfachste Kühlung des Abgases erfolgt, indem man die Vereinigung von Abgas und rückgekühltem Feststoff in mindestens einem Schwebeaustauscher vornimmt.

Die Rückkühlung des Feststoffes geschieht vorzugsweise in einem Wirbelschichtkühler, der mehrstufig ausgestaltet sein kann. Seine Betriebsweise und Ausstattung richtet sich weitgehend nach dem Einsatzstoff. Ist dessen Brennstoffgehalt hinreichend hoch, um die in der expandierten Wirbelschicht erforderlichen Temperaturbedingungen zu erzielen, kann die Rückkühlung des Feststoffes, die unter Nutzbarmachung der fühlbarenWärme vorzunehmen ist, z.B. unter Erzeugung von Wasserdampf, erfolgen. Das dabei gebildete heiße Abgas wird zweckmäßigerweise in den Wirbelschichtreaktor zurückgeführt. Ist hingegen eine separate Brennstoffzufuhr unerläßlich oder der Pyrohydrolyse-Prozeß

2

gerade dann selbstgängig, ist es vorteilhaft, die Feststoffe in einem Wirbelschichtkühler mit mehreren nacheinander durchflossenen Kühlkammern unter Aufheizung von dem Wirbelschichtreaktor insbesondere als Fluidisierungsgas zuzuführendem sauerstoffhaltigem Gas rückzukühlen.

Bei beiden Ausgestaltungen kann dem Wirbelschichtkühler eine mit Kalt-Wasser betriebene Kühlkammer, die dem Feststoff weitere Wärme entzieht, nachgeschaltet werden. Sie kann mit dem Wirbelschichtkühler eine bauliche Einheit bilden oder separat betrieben werden. Im letzteren Fall können die Abgase der Kühlkammer anderen Verwendungszwecken zugeleitet werden.

Das bei der Erfindung angewendete Prinzip der expandierten Wirbelschicht ist an sich bekannt und zeichnet sich dadurch aus, daß — im Unterschied zur « klassischen » Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und dem darüber befindlichen Staubraum ist nicht vorhanden, statt dessen nimmt innerhalb des Reaktors die Feststoffkonzentration von unten nach oben ab.

Besonders vorteilhaft ist es, das für den Verbrennungsvorgang erforderliche sauerstoffhaltige Gas in die Wirbelschicht in zwei Teilströmen in unterschiedlicher Höhe zuzuführen und die mit dem Abgas ausgetragenen Feststoffe nach Abtrennung vom Abgas in den unteren Bereich der Wirbelschicht zurückzuführen. Durch diese Arbeitsweise erhält man einerseits eine weiche, weil zweistufige Verbrennung, die lokale Überhitzungserscheinungen sowie die Bildung von $NO_X$-Gasen ausschließt, und andererseits — durch die Rezirkulation des von den Abgasen abgetrennten Feststoffes — eine hohe Temperaturkonstanz innerhalb des Systems Wirbelschichtreaktor/Abscheider/Rückführleitung.

Als Fluidisierungsgas kann praktisch jedes beliebige, die Beschaffenheit des Abgases nicht beeinträchtigende Gas eingesetzt werden. Es sind z.B. Inertgas, wie rückgeführtes Rauchgas (Abgas), Stickstoff und Wasserdampf, geeignet. Im Hinblick auf die Intensivierung des Verbrennungsprozesses ist es jedoch vorteilhaft, wenn ein Teilstrom der zuzuführenden sauerstoffhaltigen Gase dem Wirbelschichtreaktor als Fluidisierungsgas zugeleitet wird.

Es ergeben sich mithin für die Durchführung des Verfahrens in seiner bevorzugten Ausgestaltung die Möglichkeiten :

1. als Fluidisierungsgas Inertgas zu verwenden. Dann ist es unerläßlich, das sauerstoffhaltige Verbrennungsgas als Sekundärgas in mindestens zwei übereinanderliegenden Ebenen einzutragen.

2. als Fluidisierungsgas bereits sauerstoffhaltiges Gas zu verwenden. Dann genügt der Eintrag von Sekundärgas in einer Ebene. Selbstverständlich kann auch bei dieser Ausführungsform noch eine Aufteilung des Sekundärgaseintrags in mehrere Ebenen erfolgen.

Innerhalb jeder Eintragsebene sind mehrere Zuführungsöffnungen für Sekundärgas vorteilhaft. Das Volumenverhältnis von Fluidisierungsgas und Sekundärgas sollte im Bereich von 1 : 20 bis 2 : 1 liegen.

Es ist zweckmäßig, das Sekundärgas in einer Höhe bis 30 %, bezogen auf die Gesamthöhe des Wirbelschichtreaktors, mindestens jedoch 1 m über der Einleitung des Fluidisierungsgases, zuzuführen. Bei Angabe von 30 % ist — sofern das Sekundärgas in mehreren Ebenen zugeführt wird — auf die Höhenlage der obersten Sekundärgasleitung abgestellt. Diese Höhe schafft einerseits einen hinreichend großen Raum für die erste Verbrennungsstufe mit nahezu vollständiger Umsetzung zwischen brennbaren Bestandteilen und sauerstoffhaltigem Gas — sei es als Fluidisierungsgas oder Sekundärgas in einer tiefer liegenden Ebene zugeführt — und gibt andererseits die Möglichkeit, im oberen, über der Sekundärgaszuführung liegenden Reaktionsraum eine ausreichend große Ausbrandzone zu schaffen.

Die im Wirbelschichtreaktor oberhalb der Sekundärgaszuführung herrschenden Gasgeschwindigkeiten liegen im Regelfall über 5 m/sec und können bis zu 15 m/sec betragen.

Das Verhältnis von Durchmesser zu Höhe des Wirbelschichtreaktors sollte derart gewählt werden, daß Gasverweilzeiten von 0,5 bis 8,0 sec, vorzugsweise 1 bis 4 sec, erhalten werden.

Das Aufgabegut sollte einen mittleren Korndurchmesser von 30 bis 250 μm besitzen, wodurch gute Wirbelbedingungen, aber auch hinreichend kurze Reaktionszeiten gewährleistet sind.

Die im Wirbelbett einzustellende mittlere Suspensionsdichte kann in weiten Grenzen variieren und bis 100 kg/m³ reichen. Im Hinblick auf einen geringen Druckverlust sollte die mittlere Suspensionsdichte oberhalb der Sekundärgaszuführung auf Werte im Bereich von 10 bis 40 kg/m³ eingestellt werden.

Bei der Definition der Betriebsbedingungen über die Kennzahlen von Froude und Archimedes ergeben sich dann die Bereiche : ·

$$0{,}1 \leqslant 3/4 \cdot F_r^2 \cdot \varphi_g/\varphi_k - \varphi_g \leqslant 10$$

bzw.

$$0{,}01 \leqslant Ar \leqslant 100,$$

wobei

$$Ar = d_k^3 \cdot g(\varphi_k - \varphi_g)/\varphi_g \cdot \nu^2$$

und

$$F_r^2 = u^2/g \cdot d_k$$

ist.

Es bedeuten :

$F_r$ die Froudezahl

Ar die Archimedeszahl

u die relative Gasgeschwindigkeit in m/sec

$\varphi_g$ die Dichte des Gases in kg/m$^3$

$\varphi_k$ die Dichte des Feststoffteilchens in kg/m$^3$

$d_k$ den Durchmesser des kugelförmigen Teilchens in m

$\nu$ die kinematische Zähigkeit in m$^2$/sec

g die Gravitationskonstante in m/sec$^2$

Der Eintrag des Aufgabegutes in den Wirbelschichtreaktor erfolgt auf übliche Weise, am zweckmäßigsten über eine oder mehrere Lanzen, z.B. durch pneumatisches Einblasen. Infolge der guten Quervermischung reicht eine vergleichweise geringe Zahl an Eintragslanzen, bei kleineren Wirbelschichtreaktorabmessungen sogar eine einzige Lanze.

Der herausragende Vorteil der Erfindung liegt darin, daß durch die Verwendung rückgekühlter Feststoffe eine schockartige Abkühlung der Abgase erfolgt, die Korrosionsprobleme weitgehend vermeidet, und daß den Wärmeübergang behindernde Staubablagerungen naturgemäß nicht auftreten können. Die Rückkühlung der Feststoffe erfolgt — in der bevorzugten Ausgestaltung mit Wirbelkühlung — unter Bedingungen, die einen hohen Wärmeübergang an das Kühlmedium zulassen.

Die Feststoffführung für die Kühlung in einem separaten, d.h. von dem Feststoff in der Pyrohydrolysestufe abgetrennten Kreislauf bewirkt, daß — von der Anlaufphase abgesehen — eine Beladung mit HF nicht erfolgt bzw. in der Kühlphase keine HF-Verluste auftreten. Die Art der Abgaskühlung schließt zudem eine Verdünnung des Abgases aus oder aber reduziert sie auf ein Minimum für den Fall, daß ergänzend zur Feststoffkühlung geringfügige Mengen Wasser, z.B. in einer der Zugabe des rückgekühlten Feststoffes nachgeschalteten Stufe, zudosiert werden.

Die Erfindung wird anhand des Fließschemas und der Ausführungsbeispiele beispielsweise und näher erläutert.

Aufgabegut, Wasser, gegebenenfalls in Form von Dampf, und — sofern, erforderlich — Brennstoff werden dem aus Wirbelschichtreaktor 1, Abscheidezyklon 2 und Rückführleitung 3 gebildeten Zirkulationssystem über die Lanzen 4, 5 und 6 aufgegeben. Ein dem Aufgabegut entsprechender Pyrohydrolyserückstand wird nach hinreichend langer Verweilzeit über Leitung 7 abgezogen und verworfen oder gegebenenfalls einer Laugungsbehandlung zur Entfernung von Wertstoffen unterworfen.

Das Abgas des Wirbelschichtreaktors 1 gelangt in den Schwebeaustauscher 8, in dem es mit dem über Leitung 9 herangeführten im Kreislauf geführten Feststoff in Kontakt kommt, und erfährt hierbei eine erste Abkühlung. Im nachfolgenden Abscheider 10 werden Gas und Feststoff getrennt. Das Gas gelangt in einen zweiten Schwebeaustauscher 11, in den auch rückgekühlter Feststoff über die pneumatische Förderleitung 12 eingetragen wird. Feststoff und Gas, das hierbei weiter gekühlt wird, werden in einem weiteren Abscheider 13 getrennt. Das HF-haltige Gas gelangt dann zur Entstaubung in ein Elektrofilter 14 und dann über Leitung 15 in eine (nicht dargestellte) Absorptions- oder Kondensationsvorrichtung.

Der im Abscheider 10 anfallende Feststoff gelangt über Leitung 16 in den Wirbelkühler 17, in dem er zunächst vier Kühlkammern durchfließt. Hierbei gibt er einen wesentlichen Teil seiner Wärme im indirekten Austausch an im Gegenstrom zum Feststoff fließende sauerstoffhaltige Gase ab, die — staubfrei — dann über Leitung 18 dem Wirbelschichtreaktor 1 als Fluidisierungsgas zugeführt werden. Eine abschließende Kühlung der Feststoffe geschieht dann in zwei nachgeschalteten Kühlkammern, die z.B. mit Wasser gekühlt werden. Der Feststoff gelangt dann in die Vorrichtung 19 zur pneumatischen Förderung.

Der Wirbelkühler 17 wird mit sauerstoffhaltigem Gas fluidisiert, das eine weitere wesentliche Wärmemenge aus dem Feststoff aufnimmt und nach Entstaubung im Abscheider 20 dem Wirbelschichtreaktor 1 als Sekundärgas über Leitung 21 zugeführt wird. Leitung 22 dient der Rückführung des im Elektrofilter 14 abgeschiedenen Staubes in den Wirbelkühler 17.

Schließlich sind noch zwei Leitungen 23 und 24 vorgesehen, mit denen bei Feststoffanreicherung im Kreislaufsystem Wirbelkühler 17, Leitung 12, Schwebeaustauscher 11, Abscheider 13, Schwebeaustauscher 8, Abscheider 10 und Leitung 16 Feststoff in die zirkulierende Wirbelschicht ausgeschleust (Leitung 23) oder bei Feststoffverarmung Feststoff zugeführt (Leitung 24) werden kann.

Mit 25, 26 und 27 sind die Leitungen zur Zufuhr von Fluidisierungs- oder Fördergasen bezeichnet.

Beispiel 1

Zur Verarbeitung gelangte ein trockener, zuvor aufgemahlener Ofenausbruch der Aluminiumelektrolyse mit einer Schüttdichte von 1,1 kg/l und einer mittleren Körnung von 100 bis 200 μm. Der Ofenausbruch enthielt

26 Gew.-% Kohlenstoff und

4

15 Gew.-% Fluor (berechnet als F).

Aufgrund des hohen Kohlenstoffgehalts arbeitete der Pyrohydrolyseprozeß selbstgängig, d.h. es bedurfte keines zusätzlichen Brennstoffes. Die im folgenden für Gase gemachten Mengenangaben beziehen sich auf Standardbedingungen.

Der Ofenausbruch wurde in Mengen von 5 t/h über Leitung 4 zusammen mit 3,1 m³/h Wasser von 20 °C über Leitung 6 dem Wirbelschichtreaktor 1 aufgegeben. Gleichzeitig wurden über Leitung 18 3 000 m³/h Fluidisierungsluft von 300 °C und über Leitung 21 9 500 m³/h Sekundärluft von 400 °C, die jeweils im Wirbelschichtkühler 17 aufgeheizt worden waren, zugeführt. Aufgrund der gewählten Wirbelbedingungen und Betriebsparameter zirkulierte der Feststoff in dem aus Wirbelschichtreaktor 1, Abscheidezyklon 2 und Rückführleitung 3 gebildeten Zirkulationssystem derart, daß die mittleren Suspensionsdichten im Wirbelschichtreaktor 1 unterhalb der Sekundärgasleitung 21 ca. 100 kg/m³ und oberhalb der Sekundärgasleitung 21 ca. 20 kg/m³ betrugen. Damit ein einwandfreier Feststoffrücklauf in den Wirbelschichtreaktor 1 erzielt wurde, wurde die Rückführleitung 3 mit 200 m³/h Luft fluidisiert. Die Temperatur innerhalb des Zirkulationssystems lag bei 1 100 °C.

Eine der Aufgabegutmenge entsprechende Abbrandmenge von 3 t/h wurde nach einer Verweilzeit von 1 h über Leitung 7 abgezogen und in einem separaten Kühler gekühlt. Die Schüttdichte des Abbrands war 1 kg/l. Der Restgehalt an Fluor lag unter 1 Gew.-%, der von Kohlenstoff unter 0,1 Gew.-%.

Die Kühlung des Abgases des Wirbelschichtreaktors 1 erfolgte mit prozeßeigenem Feststoff. Hierzu wurde das aus dem Abscheidezyklon 2 austretende Abgas von 1 100 °C im Schwebeaustauscher 8 mit 50 t/h über Leitung 9 zugeführten Feststoff von 280 °C auf 590 °C gekühlt, wodurch sich der Feststoff selbst auf 590 °C erhitzte. Nach Durchgang durch den Abscheider 10 gelangte der Feststoff dann über Leitung 16 in den Wirbelkühler 17.

Das Abgas des Abscheiders 10 wurde im gasseitigen zweiten Schwebeaustauscher 11 mit über Leitung 12 pneumatisch vom Wirbelkühler 17 geförderten Feststoff von 80 °C vereinigt. Die Feststoffmenge lag bei 50 t/h. Die anschließende Separation von Gas und Feststoff erfolgte im Abscheider 13, in dem ein Feststoff mit einer Temperatur von 280 °C anfiel. Das im Abscheider 13 anfallende Gas, das nunmehr eine Temperatur von 280 °C aufwies, gelangte dann in das Elektrofilter 14 und anschließend in die Anlage zur Fluorwasserstoffgewinnung. Die Abgasmenge betrug 19 500 m³, die -zusammensetzung

12,8 Vol.-% $CO_2$
3,3 Vol.-% $O_2$
4,4 Vol.-% HF
61,5 Vol.-% $N_2$
17,8 Vol.-% $H_2O$

Der über Leitung 16 zulaufende, aus dem Abscheider 10 stammende Feststoff (50 t/h) wurde im Wirbelkühler 17, der vier zum Wärmeaustausch gegen Luft für den Wirbelschichtreaktor 1 und 2 mit Wasser betriebene Kühlkammern aufwies, gekühlt. Zur Fluidisierung im Wirbelkühler 17 dienten 9 500 m³/h, zum indirekten Wärmeaustausch 3 000 m³/h Luft. Beide Luftströme wurden über Leitungen 21 bzw. 18 abgeführt.

In den mit Wasser in einer Menge von 95 m³/h betriebenen Kühlkammern des Wirbelkühlers 17 erfolgte eine Aufwärmung des Kühlwassers von 40 auf 90 °C. Der Feststoff selbst kühlte sich dabei auf 80 °C ab. Er wurde unter Verwendung von 2 500 m³/h über Leitung 27 herbeigeführter Förderluft von 60 °C und einem Überdruck von 500 mbar erneut dem Schwebeaustauscher 11 zugeleitet.

Beispiel 2

Zur Gewinnung von Fluorwasserstoff wurde Flußspat verwendet, dessen mittlere Körnung 100 bis 200 μm und Dichte 1,2 kg/l betrugen. Der Kalziumfluoridgehalt lag bei 95 Gew.-%. Im Unterschied zu Beispiel 1 war hier ein zusätzlicher Eintrag von Brennstoff erforderlich.

Dem Wirbelschichtreaktor 1 wurden

1 210 kg/h Kohle (29 260 kJ/kg)
1 540 kg/h Flußspat (berechnet als $CaF_2$)
3 100 l/h Wasser von 20 °C

über die Leitungen 6, 4 bzw. 5 zugeführt. Über Leitung 18 wurden 3 000 m³/h Fluidisierungsluft von 400 °C und über Leitung 21 7 000 m³/h Sekundärluft von 550 °C zugeführt. Beide Luftströme stammten aus dem Wirbelkühler 17.

Es betrugen im Wirbelschichtreaktor 1 die mittleren Suspensionsdichten unterhalb der Sekundärgasleitung 21 100 kg/m³ und oberhalb der Sekundärgasleitung 21 25 kg/m³ sowie die Reaktortemperatur 1 120 °C. Wie im Beispiel 1 wurden zwecks einwandfreier Rückführung von Feststoff in den Wirbelschichtreaktor 1 200 m³/h Luft in die Rückführleitung 3 eingeführt. Die Verweilzeit war auf 90 Minuten eingestellt.

**0 022 591**

Eine der Aufgabemenge äquivalente Rückstandsmenge von 1,23 t/h wurde dem Zirkulationssystem über Leitung 7 entnommen. Der Rückstand hatte die Qualität von gebranntem Kalk und kann in der Bauindustrie eingesetzt werden.

Im Unterschied zu Beispiel 1 erfolgte die Abgaskühlung mit produktionsfremdem Feststoff, nämlich Aluminiumoxid. Gas- und Feststofffluß geschahen wie im Beispiel 1.

Die über Förderleitung 12, Schwebeaustauscher/Abscheider und Wirbelkühler 17 zirkulierte Feststoffmenge betrug 40 t/h. Die Förderluftmenge betrug 2100 m³/h (60 °C, Überdruck 500 mbar). Die in den Schwebeaustauscher/Abscheider-Stufen erzielten Abgas- und Feststofftemperaturen waren 290 °C (11/13) bzw. 610 °C (8/10).

In Leitung 15 fiel ein für die Gewinnung von Fluorwasserstoff bestimmtes Gas in einer Menge von 16 750 m³/h an, das folgende Zusammensetzung aufwies :

14,8 Gew.-% $CO_2$
2,1 Gew.-% $O_2$
5,0 Gew.-% HF
58,0 Gew.-% $N_2$
20,1 Gew.-% $H_2O$

Bei der Rückkühlung des über Leitung 16 eingeführten Feststoffes im Wirbelkühler 17 fielen 3 000 m³/h indirekt erhitzte und daher staubfreie Luft (Leitung 18) und 7 000 m³/h direkt erhitzte Luft (Leitung 21) an, die dem Wirbelschichtreaktor 1 als Fluidisierungsluft bzw. als Sekundärluft zugeleitet wurden.

Die mit Wasser betriebenen Kühlkammern des Wirbelschichtreaktors wurden mit 67 m³/h Wasser von 40 °C versorgt, das sich auf 90 °C erwärmte. Der Feststoff kühlte sich dabei auf 80 °C ab.

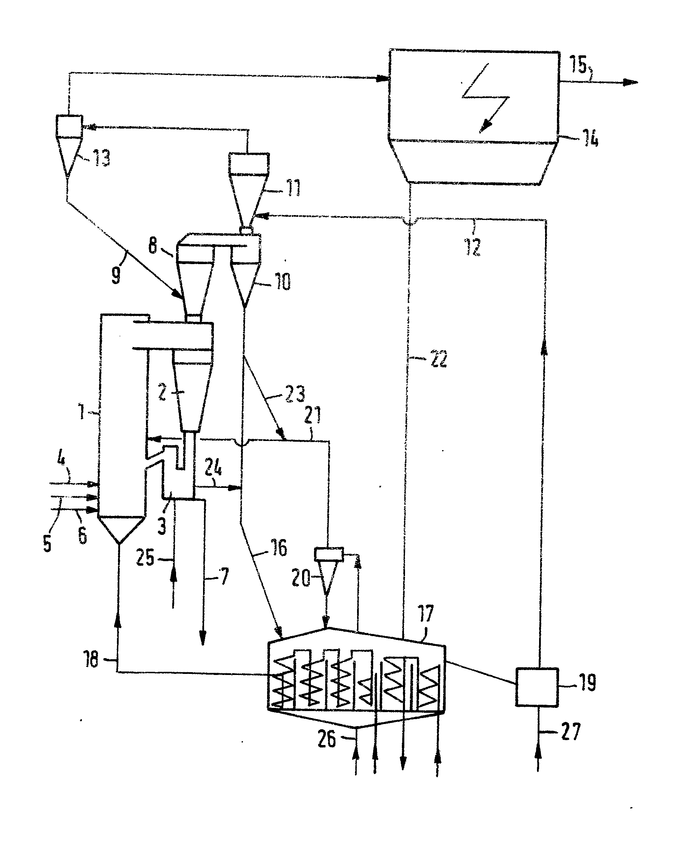

**Ansprüche**

1. Verfahren zur Herstellung von Fluorwasserstoff durch pyrohydrolytische Behandlung fluorhaltiger Materialien in einer expandierten Wirbelschicht und anschließende Kühlung der Abgase, dadurch gekennzeichnet, daß man die Kühlung der Abgase durch direkten Eintrag von im getrenntem Kreislauf geführten Feststoffen durchführt, die ihrerseits in einem Kühler unter Nutzbarmachung der fühlbaren Wärme rückgekühlt werden.

2. Verfahren nach Anspruch 1, dadurch gekennzeichnet, daß man die direkte Kühlung durch Vereinigung von rückgekühlten Feststoffen und Abgas in mindestens einem Schwebeaustauscher vornimmt.

3. Verfahren nach Anspruch 1 oder 2, dadurch gekennzeichnet, daß man die Feststoffe in einem vorzugsweise mehrstufigen Wirbelkühler rückkühlt.

4. Verfahren nach Anspruch 1, 2 oder 3, dadurch gekennzeichnet, daß man die Feststoffe in einem Wirbelkühler mit mehreren nacheinander durchflossenen Kühlkammern unter Aufheizung von dem Wirbelschichtreaktor zuzuführenden sauerstoffhaltigen Gasen rückkühlt.

5. Verfahren nach einem oder mehreren der Ansprüche 1 bis 4, dadurch gekennzeichnet, daß man in die expandierte Wirbelschicht die sauerstoffhaltigen Gase in mindestens zwei Teilströmen in unterschiedlicher Höhe zuführt und die mit dem Abgas ausgetragenen Feststoffe nach Abtrennung vom Abgas in den unteren Bereich der Wirbelschicht zurückführt.

**Claims**

1. A process of producing hydrogen fluoride by a pyrohydrolytic treatment of fluorine-containing materials in an expanded fluidized bed, followed by a cooling of the exhaust gases, characterized in that the exhaust gases are cooled by a direct contact with solids which are circulated in a separate cycle and which are recooled in a cooler with utilization of the sensible heat.

2. A process according to claim 1, characterized in that the direct cooling is effected in that recooled solids and exhaust gas are contacted in at least one suspension-type heat exchanger.

3. A process according to claim 1 or 2, characterized in that the solids are recooled in a preferably multistage fluidized bed cooler.

4. A process according to claim 1, 2 or 3, characterized in that the solids are recooled in a fluidized bed cooler in which the solids flow in succession through a plurality of cooling chambers in which oxygen-containing gases to be fed to the fluidized bed reactor are heated.

5. A process according to any of claims 1 to 4, characterized in that the oxygen-containing gases are fed to the expanded fluidized bed in at least two streams on different levels and the solids which have been entrained by the exhaust gas are separated from the exhaust gas and recycled to the lower portion of the fluidized bed.

6

**Revendications**

1. Procédé de préparation d'acide fluorhydrique par traitement pyrohydrolytique de matières fluorées dans un lit fluidisé expansé, puis par refroidissement des gaz résiduaires, caractérisé en ce qu'il consiste à effectuer le refroidissement des gaz résiduaires par introduction directe de matières solides qui passent dans un circuit fermé distinct, et qui sont refroidies de leur côté dans un réfrigérateur, en tirant profit de la chaleur sensible.

2. Procédé suivant la revendication 1, caractérisé en ce qu'il consiste à effectuer le refroidissement direct par réunion de matières solides refroidies et du gaz résiduaire dans au moins un échangeur de suspension.

3. Procédé suivant la revendication 1 ou 2, caractérisé en ce qu'il consiste à refroidir les matières solides dans un refroidisseur à lit fluidisé de préférence à plusieurs étages.

4. Procédé suivant la revendication 1, 2 ou 3, caractérisé en ce qu'il consiste à refroidir les matières solides dans un refroidisseur à lit fluidisé ayant plusieurs chambres de refroidissement qui sont traversées successivement, tout en réchauffant des gaz contenant de l'oxygène amenés du réacteur à lit fluidisé.

5. Procédé suivant l'une ou plusieurs des revendications 1 à 4, caractérisé en ce qu'il consiste à envoyer, dans le lit fluidisé expansé, les gaz contenant de l'oxygène en au moins deux courants partiels à des niveaux différents, et à retourner, dans la région inférieure du lit fluidisé, les matières solides entraînées avec le gaz résiduaire après séparation de celui-ci.